# EUROPEAN PATENT APPLICATION

(11) **EP 3 104 375 A1**
(43) Date of publication of application: **14.12.2016**
(21) Application number: 15170934.2
(22) Date of filing: 08.06.2015
(51) Int. Cl.: H01B 19/02, H02K 15/12

(54) **RAPID IMPREGNATION TOOL**

(71) Applicant: General Electric Technology GmbH, 5400 Baden (CH)
(72) Inventor: Safari-Zadeh, Immanuel, 5504 Othmarsingen (CH); Krause, Tomasz, 50-018 Wroclaw (PL)
(74) Representative: General Electric Technology GmbH

(57) **Abstract**

A mold tool 10 having at least two parts, a first part 12 and a second part 15. The first part 12 and the second part 15 are releasably coupled to configure an outer mold structure 17 and an inner mold structure 18. The outer mold structure 17 and inner mold structure18 is high strength alloy for example high strength steel. A low melt alloy 30 is disposed within the inner mold structure 18 as an inner material such that low melt alloy 30 provides an evacuable interior space 40. The evacuable interior space 40 surrounds and accommodates an insulated winding bar 20. The dimension of the insulated winding bar 20 determines the shape and dimension of the low melt alloy 30 in the inner mold structure 18.

## Description

### FIELD OF THE INVENTION

The present invention relates to impregnating devices, and more specifically, to a mold tool, molding system and a method for impregnating an insulation of a winding bar of an electric machine.

### BACKGROUND OF THE INVENTION

Vacuum pressure impregenation is one method which is typically employed for impregnation of electric machine which includes not only the electrical insulation of winding bars but also phase rings as well as other glass reinforced plastics used as constructional elements.

There are two well-known techniques in order to perform the impregnation the insulation of an electric machine. The first method is a global vacuum pressurization impregnation which consists of a large sized tank in order to place the entire electric machine and the second method is a selective tool which is matched to the size and shape of winding bars used in an electric machine. The latter one is called a single bar vacuum pressure impregnation.

Not only the size of the tools but also the required temperature of resin during the impregnation process as well as post curing of the impregnated bars and some details distinguishes the both methods.

References to the known techniques regarding single bar vacuum pressure impregnation and the global vacuum impregnation pressurization is discussed in paper titled trends in insulation systems for generators HV windings by Alstom at CIGRE 2002. The common point in both techniques is the high cost of the tools and the lack of flexibility in the case of electrical machine size change, which is a must for a flexible manufacturing process.

In all vacuum pressure impregnation methods as a first step there shall be vacuum induction to remove all vapors (moisture and hydrocarbons). In order to accelerate the process, the vacuum induction step takes place under elevated temperature. The evacuation process is inherently a slow process because of slow moisture diffusion nature. After accomplishing of evacuation step, resin is applied immersing the entire insulation, further pressurization of the resin enhances the impregnation.

The impregnation method monitoring is checked by measuring the capacitance between the winding bar conductor and housing of impregnation tool. Higher resin presence within insulation material leads to the higher value of the capacitance, which in turn is also a factor of insulation thickness and surfaces as for any capacitor. A constant value indicates the end of the impregnation process.

In the global vacuum pressurization impregnation, the resin temperature remains low but in the single bar vacuum pressurization impregnation the resin temperature will be increased significantly lowering its viscosity, enabling the impregnation of utmost densified insulations.

Post impregnation step differs for the both methods remarkably. In the global vacuum pressurization impregnation the impregnated parts are taken out and heated-up in another chamber in order to achieve the full polymerization of the resin. In single bar vacuum pressurization impregnation, an impregnation tool can also be used to accomplish the polymerization of the resin.

The current impregnation tools for the single bar vacuum pressurization impregnation apply a medium for example oil to achieve the required temperature. This means certain complexity of the impregnation tool by induction of oil passing channels, fully sealed condition between the vacuum, oil and resin dedicated channels.

The present disclosure solves the problems of the prior art by providing a mold tool, a molding system and a method and tool that impregnating an insulation of a winding bar without the disadvantages of the prior art.

It is important that any solution to the existing tools is capable of implementation within the existing mold tools due to the expense of otherwise replacing such equipment.

Accordingly, any solution must be able to be used in "retrofitted" to fit within existing mold tools for impregenation.

### SUMMARY OF THE INVENTION

The present disclosure relates to a mold tool, molding system and a method for impregnating an insulation of a winding bar of an electric machine. The subject mold tool can be used as"retrofit" within existing molding systems.

Accordingly, the present disclosure provides a mold tool for impregnating an insulation of at least one insulated winding bar of an electric machine. The mold structure comprising at least two parts, a first part and a second part, releasably coupled to configure an outer mold structure, and an inner mold structure, the inner and outer mold structure configured of high strength steel. A low melt alloy is configured to be disposed as inner material within the inner mold structure as an inner material such that low melt alloy configures an evacuable interior space to which surround and accommodate the at least one insulated winding bar, wherein the low melt alloy configured to determine the shape thereof depending upon the dimensions of the at least one insulated winding bar in the a evacuable interior space.

In another embodiment a molding system for impregnating an insulation of at least one insulated winding bar of an electric machine. The molding system comprising at least one mold tool, the mold tool having at least two parts, a first part and a second part, releasably coupled to configure an outer mold structure, and an inner mold structure, the outer and inner mold structure configured of high strength steel; and a low melt alloy configured to be disposed within the inner mold structure as an inner material such that low melt alloy configures an evacuable interior space to surround and accommodate the at least one insulated winding bar, wherein the low melt alloy configured to determine the shape thereof depending upon the dimensions of the at least one insulating winding bar in the evacuable interior space. An impregnating agent storage fludically connected with the evacuable interior to supply at least one impregnating agent to the evacuable interior at predetermined parameters. A vacuum creating arrangement adapted to create vacuum in the evacuable interior of the at least one mold tool to enable the supply of the at least one impregnating agent in the evacuable interior for impregnation.

In yet another embodiment, a method for impregnating an insulation of at least one insulated winding bar of an electric machine, the method comprising:
providing a mold tool, the mold tool having a low melt alloy configured to be disposed within an inner mold structure as an inner material such that low melt alloy configures an evacuable interior space to surround and accommodate the at least one insulated winding bar;
configuring the low melt alloy to determine the shape thereof depending upon the dimensions of the at least one insulated winding bar in the evacuable interior space ; creating vacuum in the evacuable interior of the mold tool and heating the mold tool including the at least one insulated winding bar.

In yet another embodiment the method further comprising supplying at least one impregnating agent to the evacuable interior at a predetermined parameters.

In yet another embodiment the method further comprising supplying multiple impregnating agents to the evacuable interior at a predetermined parameters.

The present disclosure offers a technical solution for all the above mentioned problems by providing a mold tool made from a high strength alloy for example steel provides rigidness which is needed to achieve dimensional accuracy for the mold tool and the self-carrying structure. The mold tool of the present disclosure is provided with a low melt alloy as inner material of the mold tool providing highest design and shape flexibility. Re-use of such low melt alloy by its reshaping, machining and re-melt provides cost effectiveness and increase manufacturing speed, avoiding new mold tool purchase as the present mold tool is capable of impregnating a large number of the insulated winding bar of different sizes merely by reshaping, machining and re-melt of the low melt alloy according to the dimensions of the insulated winding bar. The kind of low melt alloy is matched to the foreseen processes and epoxies. The low melt alloy is operable in the range up to 500 °C. Lower temperature below 25 °C is not common for impregnation process and still be performed by the present system.

Depending on the job or task, the low melt alloy is removable and replaceable by another material or the same low melt alloy is re-fill in cavities which remained from the previous task of impregnation to adjust a smaller dimension insulated winding bar.

The re-melt of the low melt alloy can be partially or fully and be accompanied by placing or submerging some other elements like hollow conductors, hoses or for cooling or heating or sensor elements. Such placed or submerged elements provide further features for certain purposes / processes based on the features of such elements. The surface of the low melt alloy can be ruggedized by coating or special heat treatment. Low melt alloy surface quality, roughness is to be matched to the required product requirements.

Any damaged surface of the low melt alloy is iron-out either by local re-melt or machining. Such local mending is a cost effective method compared to a global material replacement and is done in a short period of time with required exactness. The impregnating injection and vacuum induction channels are either changed or matched based on prior simulation and test results and again can be re-filled or new machined as the dimension of the insulated winding bar without any need for a global or total re-melt. The preparation of the mold tool can be done either at workshops or obtained from any qualified sub-supplier.

A dedicated vacuum chamber replace the vacuum Pressure impregnation tank, otherwise a tray with corresponding fixtures and electrical connections is placed in a modified vacuum pressure impregnation tank provide a solution. End parts which are in a bent form of the insulated winding bar needs no exact or a tailored mold tool as such end parts are covered by rubber and corresponding shims. Applying of shrinkable hoses provide tight sealing, withstanding the hot and pressurized impregnation process.

The focus of this invention is on the single bar vacuum pressurization impregnation, which is inherently environmental friendly due to use of low resin amount and the ease of its transport because of compact size and low weight. Better cost effectiveness can be achieved by using of more than one bar in an impregnation tool and method. The heating of the impregnating part(s) such as the insulated winding bar is done not by the heating of the mold tool but by passing high current(s) through the insulated winding bar. Each insulated winding bar is connected to a corresponding terminal and be fed by high alternate current and high direct current, adjusting required individual temperature. Various other objects and features of the present disclosure will be apparent from the following detailed description and claims.

These together with the other aspects of the present disclosure, along with the various features of novelty that characterize the present disclosure, are pointed out with particularity in the present disclosure. For a better understanding of the present disclosure, its operating advantages, and its uses, reference should be made to the accompanying drawings and descriptive matter in which there are illustrated exemplary embodiments of the present disclosure.

### BRIEF DESCRIPTION OF THE DRAWINGS

The advantages and features of the present disclosure will be better understood with reference to the following detailed description and claims taken in conjunction with the accompanying drawings, wherein like elements are identified with like symbols, and in which:
Fig. 1 is a front view of a mold tool, in accordance with an exemplary embodiment of the present disclosure;
Fig. 2a is a section view of the mold tool along the line A-A in accordance with an exemplary embodiment of the present disclosure;
Fig. 2b is an enlarged view of the encircled part of the Fig 2a in accordance with an exemplary embodiment of the present disclosure;
Figs. 3a to 3c illustrate a mold tool with a plurality openings for multistage vacuum impregnation in accordance with various exemplary embodiments of the present disclosure;
Fig. 4 is a front view of a mold system in accordance with an exemplary embodiment of the present disclosure;
Fig. 5a is a perspective view of a vacuum creating arrangement with an exemplary first embodiment of the present disclosure;
Fig. 5b is a perspective view of a vacuum creating arrangement with an exemplary second embodiment of the present disclosure;
Fig. 5c is a perspective view of a vacuum creating arrangement with an exemplary third embodiment of the present disclosure;
Fig. 5d is a perspective view of an electric current arrangement with an exemplary embodiment of the present disclosure;
Fig. 6 is a front view of a mold tool with a high current power source with an exemplary embodiment of the present disclosure;
Fig. 7 is a graph of heat control mechanism with an exemplary embodiment of the present disclosure;
Fig. 8a is a perspective view of a compact mold tool with an exemplary first embodiment of the present disclosure;
Fig. 8b is a cross sectional view of a compact mold tool with an exemplary first embodiment of the present disclosure;
Fig. 8c is a perspective view of a sealing with an exemplary first embodiment of the present disclosure
Fig. 9 is a perspective view of a holder with an exemplary embodiment of the present disclosure.

### DETAILED DESCRIPTION OF THE PRESENT DISCLOSURE

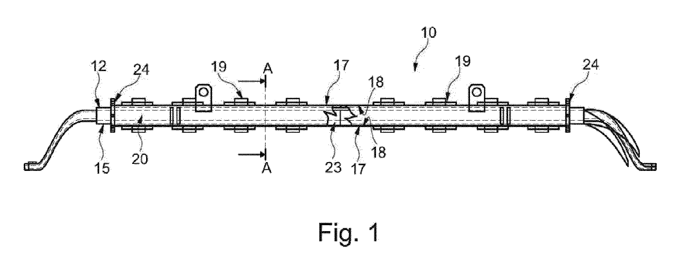

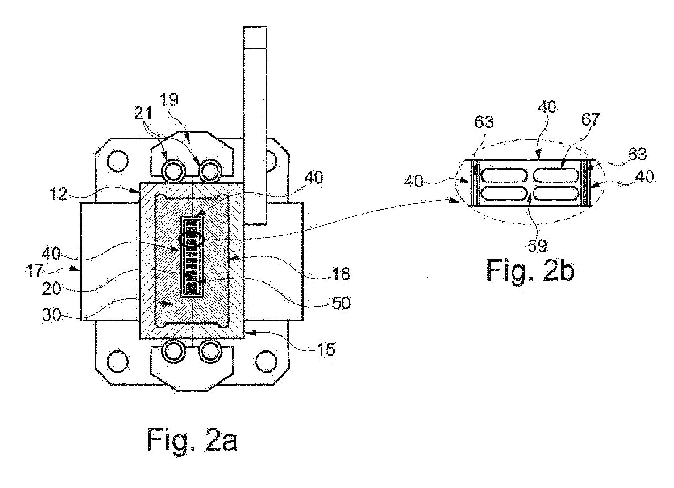

Referring now to Figure 1 and 2, a mold tool 10 having at least two parts, a first part 12 and a second part 15. The first part 12 and the second part 15 are releasably coupled to configure an outer mold structure 17 and an inner mold structure 18. The outer mold structure 17 and inner mold structure18 is high strength alloy for example high strength steel. A low melt alloy 30 is disposed within the inner mold structure 18 as an inner material such that low melt alloy 30 provides an evacuable interior space 40. The evacuable interior space 40 surrounds and accommodates an insulated winding bar 20. The dimension of the insulated winding bar 20 determines the shape and dimension of the low melt alloy 30 in the inner mold structure 18.

The mold tool 10 is having shape for example circular, oval, rectangular or polygonal depending upon the insulated winding bar 20 which is to be impregnated. The winding bar cross-sectional dimensions can be up to 200 mm x 100 mm and the length can vary between 1 to 20 meters. This means that the mold tool 10 sizes are adapted as per the insulated winding bar 20.

As illustrated in Figure 2a the insulated winding bar 20 is accommodated in the evacuable interior space 40 which is filled with an impregnating agent 50 and surrounded by the low melt alloy 30 completely. Further the low melt alloy 30 is disposed with in the inner mold structure 18 as inlay and covered completely by the first part 12 and the second part 15 of the outer mold structure 17 of the mold tool 10. For holding the first part 12 and the second part 15, fastening devices for example sliding locking devices 19 is provided. End flanges 24 is provided for further length extension. The sliding locking device 19 is having a pair of inclined rods 21which are non-parallel and inclined between 1° to 5° towards each other. Moving of the sliding locking devices 19 will push or pull the mold tool's 10 first part 12 and the second part 15 towards each other or separating them. The moving of the sliding locking device 19 is done simultaneously by hydraulic, electric, pneumatic device avoiding any bending or twisting of the toll sections. Coupling and fixation of the mold tool 10 parts can vary and replaced by clamping devices bolted together. Various vents, sensors and measuring connectors (not shown) as well as rubber seals are part of the process and of the mold tool to ensure the required quality. Further as shown in Fig 2b, the evacuable interior space 40 is shown completely surrounds and accommodates the insulated winding bar 20. The winding bars 20 are insulated by mica tapes to form layers of insulation 63. Copper strands 67 of the insulated winding bar 20, layers of insulation 63 and voids 59 which are filled with impregnating agent 50 after the impregnation.

In an embodiment the low melt alloy 30 is reusable and operable up to 500°C. By means of re-machine or re-melt of the low melt alloy 30, the desired dimensional-change is for impregnation of insulated winding bar 20 is achieved with no need of total tool altering or re-manufacturing of the mold tool 10. Preferably the low melt alloy 30 is tin, bismuth, aluminum, copper, magnesium, lead and zinc alloys.

In yet another embodiment, the surface of the low melt alloy 30 is ruggedized by coating and/or mixing of steel or bronze balls to alter properties thereof.

For impregnation an inlet 23 is provide in the mold tool 10 through which an impregnated agent 50 is supplied to the evacuable interior space 40. The insulated winding bar 20 is completely impregnated by the agent 50 and for that the evacuable interior space 40 is completely filled with the impregnated agent 50. For making the impregnation more effective and symmetrical, inlet is foreseen in the mid region of the mold tool 10. The injection of the impregnated agent 50 in a single bar mold tool 10 can be carried out just on one side of the mold tool 10 and at the same time evacuating on the other-side as combination of suction and pressurization. The impregnated agent 50 for example hot-pressurized resin is preheated and supplied with a pressurized (neutral) gas such as nitrogen to support the injection process. Other agents for example nano filled solvents can be used before the resin impregnation or accompany the resin impregnation process providing certain features to main insulation. Also a post resin-impregnation prior to a polymerization is possible by means of various semi, or fully conductive agents.

A corresponding fluid(s) can be applied providing partial discharge resistance to the latter insulation layer.

In yet another embodiment a plurality of openings 100 are configured on the mold tool 10 to enable creation of vacuum and supply of the impregnating agent 50 within the evacuable interior space 40 to impregnate the insulating winding bar 20 throughout the mold tool 10.

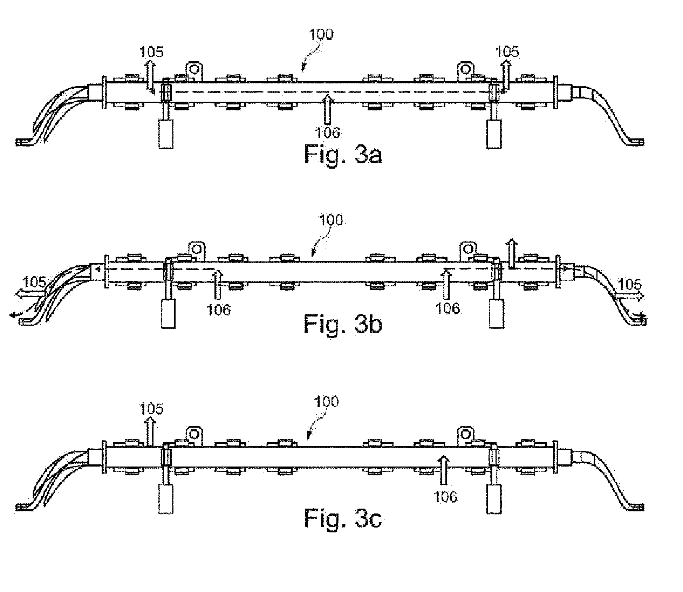

Referring now to Figure 3a, 3b and 3c where the mold tool 10 is illustrated to include a plurality of openings 100 for a multistage vacuum impregnation for long insulated winding bar 20 or highly compact insulated winding bar 20 with densified filers. The plurality of openings 100 for example includes multi vacuum outlets 105 and pressurized resin inlets 106 as shown by arrows are provided throughout the mold tool 10. Depending upon the foreseen process, the unsymmetrical or symmetrical openings 100 can be introduced. In Fig 3a and 3b symmetrical multi vacuum outlets 105 and pressurized resin inlets 106 are shown by arrows. In Fig 3c the unsymmetrical multi vacuum outlets 105 and pressurized resin inlets 106 are shown by arrows.

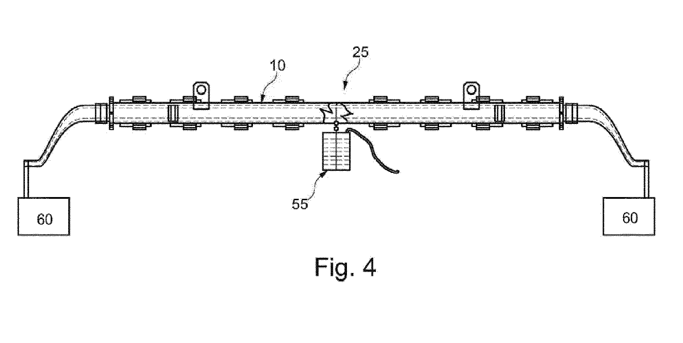

In Figure 4 a molding system 25 is illustrated. The molding system 25 includes a mold tool, such as the mold tool 10, impregnating agent storage 55 and a vacuum creating arrangement 60. The mold tool 10 as described above has been incorporated in the molding system 25 for impregnating the insulation of the insulating winding bar 20 of the electric machine along with the impregnating agent storage 55 and the vacuum creating arrangement 60 and will be described herein. The description of the mold tool is not repeated for the sake of brevity. The impregnating agent storage 55 is fludically connected with the evacuable interior space 40 to supply the impregnating agent 50 to the evacuable interior space 40 at predetermined parameters. The fludically connection can be equipped with various pressure and heat measuring but also valves and vents. Further agents can be added during the supply of the resin at such connections avoiding the change of overall impregnation resin composition in 50.

The vacuum creating arrangement 60 creates an overall vacuum in the evacuable interior space 40 of the mold tool 10 to enable the supply of the impregnating agent 50 in the evacuable interior space 40.

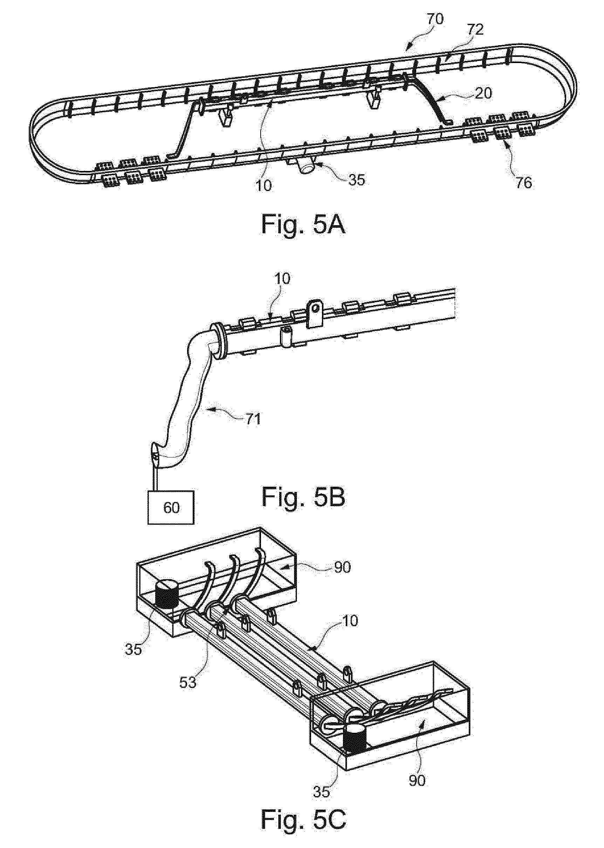

There are various options for creating vacuum through the vacuum creating arrangement 60 as depicted in Figure 5a to 5c. The option as shown in Fig 5a provides an overall vacuum for all winding bars placed and confined in within the housing 70. Other options shown in Fig 5b and 5c provides individual vacuum.

In Figure 5a, a lower part 72 of a housing 70 is shown which accommodate one or more mold tool 10. The shape and dimension of the housing 70 is determined on the dimension of the mold tool 10, which in fact depend upon the dimension of the insulated winding bar 20. The housing 70 has an upper part 75 (not shown) releasably coupled to the lower part 72 provide a sealed chamber. There in an inbuilt vacuum in the housing 70.

In yet another embodiment the vacuum creating arrangement 60 is having a vacuum pump 35 and the housing 70 capable of accommodating the mold tool 10 there within. The housing 70 is connected to the vacuum pump 35 to enable the vacuum pump 35 to create vacuum in the housing 70 so as to create vacuum in the mold tool 10. Metal intersections inform of electrical connectors 76 are provided in the housing 70 to carry in high current for heating of the insulating winding bar 20.

As shown in Fig. 5b, a flexible vacuum-proof hose 71 provides independent portable vacuum pressure impregnation unit with highest degree of flexibility. Preferably the vacuum creating arrangement 60 having the hose 71 capable of being connected to the mold tool 10 to create vacuum in the hose 71 through the vacuum creating arrangement 60 so as to create vacuum in the mold tool 10.

Fig. 5c illustrate the vacuum creating arrangement 60 having the vacuum pump 35 and a vacuum vessel having a pair trays 90, each disposed along ends of the molding tool 10 to enable the vacuum pump 35 to create vacuum in each of the tray 90 so as to create vacuum in the mold tool 10. The insulating winding bar 20 vacuumed and impregnated as group of individual bars, each possessing the mold tool 10 with separate or in-common heating device (not depicted here). All the insulated winding bar 20 share the same vacuum-vessel(s) having the pair trays 90, which in-turn contain vacuum pumps 35 or be connected to a central vacuum pump 35. Each tray 90 can also have its own vacuum pump 35. Sealing (53) is provided between the tray 90 and the mold tool 10 to prevent any leakage, stop the entry of air in both directions, other impurities and to prevent the leakage of impregnating agent 50.

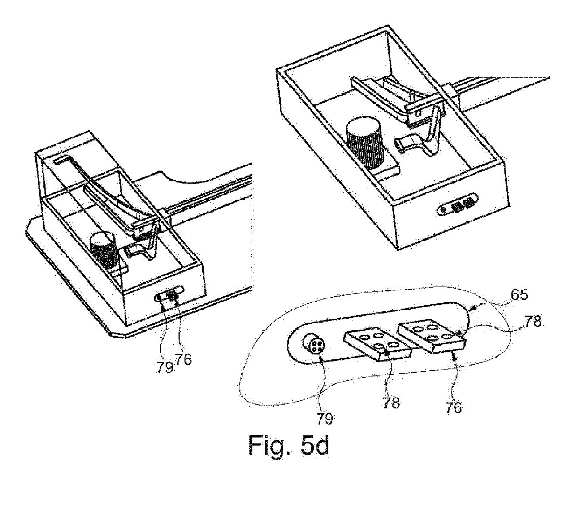

As shown in Fig. 5d, an electric current arrangement having a socket 65 having a plurality of the electrical connectors 76 and a plurality of signal sockets 79. The electrical connectors 76 are having a plurality of copper lugs 78 to provide the high electrical current. The signal sockets 79 provide the low electrical currents. The socket is fixed in the tray 90 as gas tight.

Preferably a high current power source (130) configured to conduct a heating current through the at least one insulating winding bar (20) and the at least one mold tool (10) achieving an insulation temperature up to 300°C. High power thyristors with corresponding electronic (not shown here) can manage the required output.

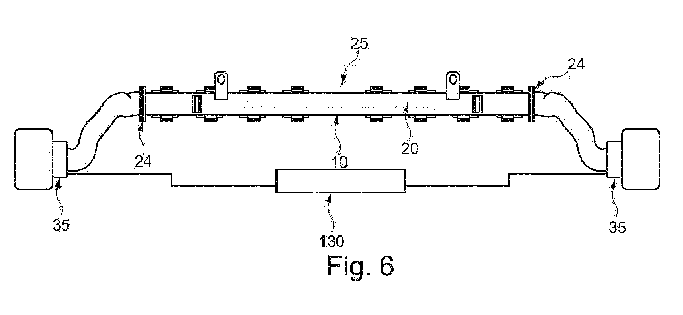

Fig. 6 illustrates the high current power source 130 configured to conduct a heating current through the insulated winding bar 20 due to the conductor resistance and the mold tool 10 due to the eddy-current up to 300°C. The two vacuum pumps 35 which can be independent provide highest flexibility and best match to the various length of the insulated winding bar 20. End flanges 24 which are insulated conduct the heating current through the insulating winding bar 20 and can be used as signal-terminal for various sensors (not shown) placed inside of the mold tool 10. Special design of the end flanges 24 to conduct the high current as well as separated vacuum pumps 35 with corresponding computer controlled circuits (not shown) can be part of the molding system 25.

In yet another embodiment, the high current power source 130 is capable of supplying high direct current to heat up the insulated winding bar 20.
Preferably the high current power source 130 supplies a high alternate current to heat-up the mold tool 10.

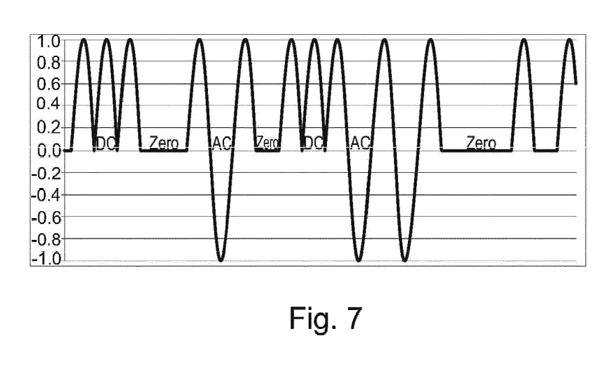

Fig. 7 illustrates a graph of a heat control mechanism of the molding system 25. A high current need to pass through the insulated winding bar 20 to adjust the heat during pre and post impregnation steps as of vacuum-induction, impregnating agent injection and polymerization. Simple high AC current of a transformer within range of 2 -100 kVA needs to be rectified on-demand with certain ratio of alternate current and direct current depicted in Fig. 7. The high direct current heats the copper strands 67 of the insulated winding bar(s) 20 only and high alternate current heats primarily the mold tool 10. A controlled alternate current and direct current ratio guarantee best heat distribution. By means of the ratio-altering, either insulated winding bar 20 or the mold tool 10 is heated up accordingly providing a uniform temperature distribution alongside of the mold tool 10. The higher heat exchange rate of the outer mold structure 17 of the mold tool 10 to the environment can be compensated by controlling the alternate current and direct current ratio. In the case of multiple insulated winding bars 20, each insulated winding bar 20 have a dedicated current-temperature-control.

Preferably the heating current from the high current power source 130 that is capable of being interrupted via a pulse width modulation to control temperature rise and to maintain a respective predetermined temperature value of the insulated winding bar 20 and the mold tool 10. The pulse width modulation interrupts the current flow providing full control or heat rise rate (PID) further avoiding any overheating, once the required temperature is achieved it compensate just the drain heat rate. The temperature range would be up to 300°C based on the method step.

Pre heating and vacuum at early stage with modest heating rate, Resin Impregnation with non, or low heating rate and the post-impregnation with highest heat rate to initiate the polymerization. Once the polymerization initiates, the heat rate diminished based on the pre-defined values.

Several distributed temperature probes (not shown) and / or infrared sensors deliver the values for the best control of a uniform temperature profile. The figure 7 depicts the heat control mechanism, but elevated frequencies beyond 50/60Hz can also be introduced by amplifying eddy current impact.

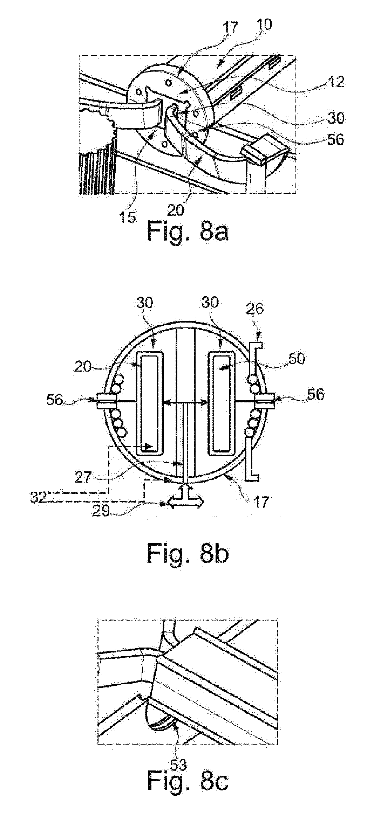

Fig. 8a and 8b illustrates the mold tool 10 which is compact where at least two insulated winding bar 20 are placed inside of the mold tool 10. Due to better utilization of the mold material, speeding up the output of the mold tool 10, there is a pair of winding bars 20 placed into a single mold tool 10. The mold tool 10 is divided into the first part 12 and the second part 15 and filled by low melt alloy 30, machined and sealed. A sealing region 56 which is a dividing line between the first part 12 and the second part 15 is provided to seal both the parts. The sealing region 56 between the first part 12 and the second part 15 can be positioned horizontally, vertically or inclined matched to the dimensions, numbers of the winding bars.

Figure 8b show additional option heating / cooling through a plasma source 32. Hollow cooling-channels 26 out of the outer mold structure 17 serve as active cooling measure, preferably closed loop but segregated circuits between the first part 12 and the second part 15. A multi-purpose vacuum-induction, solvent and impregnating agent injection channel 29 with heater is provided. Mid channels 27 provide a uniform distribution of the resin around the insulated winding bar 20.

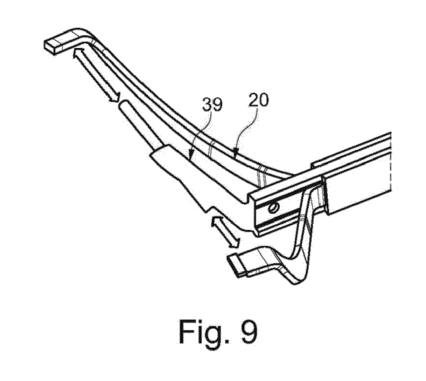

Fig. 9 illustrates a holder 39 which is provided to hold or fix the bar ends bend portion of the winding bar 20. By means of the corresponding fixtures, a pre-defined and precise positioning of the insulated winding bar 20 ends can be achieved prior to full polymerization of the resin.

A method for impregnating an insulation of the insulating winding bar 20 of the electric machine is provided. The method includes configuring the low melt alloy 30 to determine the shape thereof depending upon the dimensions of the insulating winding bar 20 in the evacuable interior space 40. A vacuum is created in the evacuable interior space 40 of the mold tool 10. The mold tool 10 including the insulated winding bar 20 is heated to remove moisture and impurities such as volatile solvents, vapors, evaporated material.

Preferably the method further supplies the impregnating agent 50 to the evacuable interior space 40 at predetermined parameters at multiple stages of impregnation. The predetermined parameters are temperature and the duration of the vacuum, pressure & temperature of the injection resin, post-pressurization of the impregnated winding bar by resin or other fluids for example asphalt, temperature to initiate the polymerization as well as during the polymerization.

In yet another embodiment the method supplies multiple impregnating agents 50 to the evacuable interior space 40 at predetermined parameters. The multiple impregnating agents are for example nano filled solvents can be used before the resin impregnation or accompany the resin impregnation process providing certain features to main insulation. Also a post resin-impregnation prior to a polymerization is possible by means of various semi, or fully conductive agents.

A corresponding fluid(s) can be applied providing partial discharge resistance to the latter insulation layer.

By measuring capacitance value between the insulating winding bar 20 and an outer mold structure 17 of the mold tool 10 to determine end of the impregnation of the insulating winding bar 20. The mold tool 10 along with the insulating winding bar 20 is heated to elevate the temperature. The elevated temperature has to be maintained. Polymerization of the impregnating agent 50 is initiated and cooling of the mold tool 10 along with the insulating winding bar 20 is done after accomplishing of the polymerization.

The duration of this process stage, as well as the maximum temperature is based on the impregnating agent 50 and other empirical data. In order to achieve higher densification grade, additional pressure can be applied to the insulated winding bar 20 sides either by resin or by some other fluids. The cooling will be done either by natural convection or forced.

All the parts which are in connection in the present disclosure are protected by seals to avoid any kind of leakages on either side.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above examples teaching. The embodiments were chosen and described in order to best explain the principles of the present disclosure and its practical application, to thereby enable others skilled in the art to best utilize the present disclosure and various embodiments with various modifications as are suited to the particular use contemplated. It is understood that various omission and substitutions of equivalents are contemplated as circumstance may suggest or render expedient, but such are intended to cover the application or implementation without departing from the spirit or scope of the claims of the present disclosure.

### Reference Numerals

- 10: The mold tool
- 12: First part
- 15: Second part
- 17: Outer mold structure
- 18: Inner mold structure
- 19: Sliding locking devices
- 20: Insulated winding bar
- 21: Inclined rods
- 23: Inlet
- 24: End flanges
- 25: Molding system
- 26: Hollow cooling-channels
- 27: Mid channels
- 29: Impregnating agent injection channel
- 30: Low melt alloy
- 32: Plasma source
- 35: Vacuum pump
- 39: Holder
- 40: Evacuable interior space
- 50: Impregnating agent
- 53: Sealing
- 55: Impregnating agent storage
- 56: Sealing region
- 59: Voids
- 60: Vacuum creating arrangement
- 63: Layers of insulation
- 65: Socket
- 67: Copper strands
- 70: Housing
- 71: Hose
- 72: Lower part
- 75: Upper part
- 76: Electrical connectors
- 78: Copper lugs
- 79: Signal sockets
- 90: Pair trays
- 100: Plurality of openings
- 105: Multi vacuum outlets
- 106: Pressurized resin inlets
- 130: High current power source

## Claims

1. A mold tool (10) for impregnating an insulation of at least one insulated winding bar (20) of an electric machine, the mold tool (10) comprising:
at least two parts, a first part (12) and a second part (15), releasably coupled to configure an outer mold structure (17), and an inner mold structure (18), the outer (17) and inner mold structure (18) configured of high strength steel; and
a low melt alloy (30) configured to be disposed within the inner mold structure as an inner material such that low melt alloy (30) configures an evacuable interior space (40) to surround and accommodate the at least one insulated winding bar (20), wherein the low melt alloy (30) configured to determine the shape thereof depending upon the dimensions of the at least one winding bar (20) in the evacuable interior space (40).

2. The mold tool (10) according to claim 1, wherein the low melt alloy (30) is reusable and operable up to a temperature of 500 °C.

3. The mold tool (10) according to claim 1, further comprising a plurality of openings (100) configure on the mold tool (10) to enable creation of vacuum and supply at least one impregnating agent (50) within the evacuable interior space (40) to impregnate the at least one insulated winding bar (20) throughout the mold tool (10).

4. The mold tool (10) according to claim 2, wherein the low melt alloy (30) is tin, bismuth, aluminum, copper, magnesium, lead and zinc alloys.

5. The mold tool (10) according to claim 2, wherein surface of the low melt alloy (30) is ruggedized by coating and/or mixing of steel or bronze balls to alter properties thereof.

6. A molding system (25) for impregnating an insulation of at least one insulated winding bar (20) of an electric machine, the molding system comprising:
at least one mold tool (10), the mold tool (10) having
at least two parts, a first part (12) and a second part (15), releasably coupled to configure an outer mold structure (17), and an inner mold structure (18), the outer (17) and inner mold (18) structure configured of high strength steel; and
a low melt alloy (30) configured to be disposed within the inner mold structure (18) as an inner material such that low melt alloy (30) configures an evacuable interior space (40) to surround and accommodate the at least one insulating winding bar (20), wherein the low melt alloy (30) configured to determine the shape thereof depending upon the dimensions of the at least one insulated winding bar (20) in the evacuable interior space (40);
an impregnating agent storage (55) fludically connected with the evacuable interior space (40) to supply at least one impregnating agent to the evacuable interior space (40) at a predetermined parameters; and
a vacuum creating arrangement (60) adapted to create vacuum in the evacuable interior space (40) of the at least one mold tool (10) to enable the supply of the at least one impregnating agent (50) in the evacuable interior space (40) for impregnation.

7. The molding system (25) according to claim 6, wherein the vacuum creating arrangement (60) comprises:
a vacuum pump (35), and
a housing (70) capable of accommodating the at least one mold tool (10) there within, the housing (70) connected to the vacuum pump (35) to enable the vacuum pump (35) to create vacuum in the housing (70) so as to create vacuum in the at least one mold tool (10).

8. The molding system (25) according to claim 6, wherein the vacuum creating arrangement (60) comprises:
a hose (71) capable of being connected to the mold tool (10) to create vacuum in the hose (71) through the vacuum creating arrangement (60) so as to create vacuum in the mold tool (10).

9. The molding system (25) according to claim 6, wherein the vacuum creating arrangement (60) comprises:
a vacuum pump (35), and
a vacuum vessel having a pair trays (90), each disposed along ends of the at least one molding tool (10) to enable the vacuum pump (35) to create vacuum in each of the tray (90) so as to create vacuum in the at least one mold tool (10).

10. The mold system (25) according to claim 6, further comprising a high current power source (130) configured to conduct a heating current through the at least one insulating winding bar (20) and the at least one mold tool (10) achieving an insulation temperature up to 300°C.

11. The mold system (25) according to claim 8, wherein the high current power source (130) capable of supplying high direct current to heat up the at least one insulated winding bar (20).

12. The mold system (25) according to claim 8, wherein the high current power source (130) supply a high alternate current to heat-up the at least one mold tool (10).

13. The mold tool (10) according to claim 8, wherein the heating current from the high current power source (130) that is capable of being interrupted providing a pulse width modulation to control temperature rise and to maintain a respective predetermined temperature value of the at least one insulated winding bar (20) and the at least one mold tool (10).

14. A method for impregnating an insulation of at least one insulated winding bar (20) of an electric machine, the method comprising:
providing a mold tool (10), the mold tool (10) having a low melt alloy (30) configured to be disposed within an inner mold structure (18) as an inner material such that low melt alloy (30) configures an evacuable interior space (40) to surround and accommodate the at least one insulated winding bar (20);
configuring the low melt alloy (30) to determine the shape thereof depending upon the dimensions of the at least one insulated winding bar (20) in the evacuable interior space (40); and
creating vacuum in the evacuable interior space (40) of the mold tool (10) and heating the mold tool (10) including the at least one insulated winding bar (20).

15. The method according to claim 11, further comprising:
supplying at least one impregnating agent (50) to the evacuable interior space (40) at a predetermined parameters.

16. The method according to claim 11, further comprising:
supplying multiple impregnating agents (50) to the evacuable interior space (40) at a predetermined parameters.
